Europäisches Patentamt

European Patent Office

Office européen des brevets

(19)

(11) Veröffentlichungsnummer: **0 378 988 B1**

(12) **EUROPÄISCHE PATENTSCHRIFT**

(45) Veröffentlichungstag der Patentschrift: **17.08.94**

(51) Int. Cl.⁵: **G21C 13/00**

(21) Anmeldenummer: **89890309.1**

(22) Anmeldetag: **05.12.89**

(54) **Verfahren und Anlage zum Nachweis des Austritts von radioaktiver Strahlung in atomtechnischen Anlagen.**

(30) Priorität: **07.12.88 AT 2997/88**

(43) Veröffentlichungstag der Anmeldung:
**25.07.90 Patentblatt 90/30**

(45) Bekanntmachung des Hinweises auf die
Patenterteilung:
**17.08.94 Patentblatt 94/33**

(84) Benannte Vertragsstaaten:
**BE CH DE ES FR GB LI NL**

(56) Entgegenhaltungen:
**EP-A- 0 110 867**
**BE-A- 648 391**
**GB-A- 868 672**

**PATENT ABSTRACTS OF JAPAN, Band 10,
Nr. 64 (P-436)[2121], 14. März 1986 ; & JP-A-60
205 413**

(73) Patentinhaber: **Urdl, Franz**
**Wendstattgasse 9/98**
**A-1100 Wien (AT)**

(72) Erfinder: **Urdl, Franz**
**Wendstattgasse 9/98**
**A-1100 Wien (AT)**

(74) Vertreter: **Collin, Hans, Dipl.-Ing. Dr. et al**
**Patentanwälte**
**Dipl.-Ing. Dr. Hans Collin**
**Dipl.-Ing. Erwin Buresch**
**Dipl.-Ing.Armin Häupl**
**Mariahilferstrasse 50**
**A-1070 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 378 988 B1

**Beschreibung**

Die Erfindung betrifft ein Verfahren und eine Anlage zum Nachweis des Austritts von radioaktiver Strahlung in radioaktiv strahlende Substanzen enthaltenden Bauwerken kerntechnischer Anlagen, z.B. Kernkraftwerken, Wiederaufbereitungs- und Versuchsanlagen, Zwischen- und Endlagerstätten, über und unter der Erde u.dgl., bei dem aus Bauwerksräumen, welche strahlende Substanzen enthalten, Medium, insbesondere Luft abgeleitet, insbesondere abgesaugt, hernach konzentriert, insbesondere verdichtet und einem Strahlungsdetektor zugeführt wird. Durch die EP-A-0 110 867, die der AT- 379 704 entspricht ist ein Verfahren zur Kontrolle des Übertritts von radioaktiver Strahlung in die Umgebung von Atomkraftwerken bekannt geworden, wobei der bisher zur Feststellung von Strahlen verwendete Geigerzähler durch Pflanzen ersetzt wurde. Es werden Pflanzen verwendet, die unter dem Einfluß radioaktiver Strahlung deutlich sichtbare Veränderungen des Wachstums zeigen, also etwa zu wuchern oder zugrundezugehen beginnen. Das Absterben der als Strahlungsindikator verwendeten Pflanzen zeigt an, daß Strahlung in die Umwelt gelangte und somit auch der Lebensraum des Menschen gefährdet ist. Dadurch wird der Öffentlichkeit die Möglichkeit gegeben, sich selbst zu überzeugen, ob aus Teilen der kerntechnischen Anlage radioaktive oder überhaupt strahlende Substanzen in die Umwelt gelangten. Nachteilig an diesem Verfahren ist die Tatsache, daß das Medium von den als Strahlungsdetektor verwendeten Pflanzen zusätzlich zur Gebäudemauer der kerntechnischen Anlage durch eine ßeschüttung mit Erde, Steinen u.dgl. getrennt ist und damit die die Pflanzen erreichende Strahlungsintensität deutlich abgeschwächt ist. Diese vorbekannte Strahlungskontrolle ist somit wenig sensibel. Die GB-A 992 455 betrifft eine Drucküberwachungsvorrichtung, die vornehmlich dazu dient, den Austritt von radioaktiver Strahlung aus einem Reaktorbehälter an die Atmosphäre bei Reaktorstörfällen zu verhindern. Dabei wird allerdings keine Messung der Radioaktivität außerhalb des Reaktorbehälters vorgenommen. Auch diese Vorrichtung bringt somit keine ausreichende Absicherung gegenüber den Gefahren, die im Zusammenhang mit dem Betrieb von Kernkraftwerken drohen. Durch die GB-A 868 672 wurde ein Lüftungsverfahren für Atomreaktoren bekannt, bei dem Luft aus dem Containment (bzw. Schutzhülle aus Stahl) des Reaktors abgezogen und unter erhöhtem Druck einem Behälter zugeführt wird, aus dem sie einem Detektor für Radioaktivität zugeführt wird, der die Luftabsaugung durch Stillsetzen der Kompressoren unterbricht, sobald die dem Detektor zugeführte Radioaktivität einen Schwellenwert übersteigt. Die Abschaltung der Kompressoren zeigt daher das Vorhandensein zu hoher Radioaktivität im Containment an. Nachteilig an diesem Verfahren ist der Umstand, daß das Abschalten der Kompressoren von der Öffentlichkeit nicht beobachtet werden kann, und sich lediglich auf die Luft im Containment bezieht, so daß das Auftreten eines Schadens im Reaktor mit Austritt von Radioaktivität vor der Bevölkerung geheimgehalten werden kann.

Hier Abhilfe zu schaffen, ist eines der Ziele der Erfindung. Die Erfindung ist vornehmlich dadurch gekennzeichnet, daß das konzentrierte, insbesondere verdichtete, Medium einer als Strahlungsdetektor unter dem Einfluß radioaktiver Strahlung Veränderungen der Erscheinungsform zeigenden, außerhalb des Bauwerkes od.dgl., angeordneten Pflanze(n) in der Öffentlichkeit zugänglicher, einsehbarer Weise, insbesondere in einem nahe dem Bauwerk gelegenem Nebengebäude, vorteilhaft in einem Gewächshaus, insbesondere Glashaus, in einer der Umwelt und der(n) Pflanze(n) gegenüber abgeschlossenen Form zugeführt und nach Passieren der Pflanze(n) in das Kraftwerk od.dgl. zurückgeleitet wird.

Wenn bei einem Verfahren der eingangs genannten Art als Strahlungsdetektor eine unter dem Einfluß radioaktiver Strahlung Veränderungen der Erscheinungsform zeigende Pflanze(n) eingesetzt wird (werden), und diese Pflanze(n) in einer für die Bevölkerung gut zugänglichen und einsehbaren Weise aufgestellt wird (werden), so wird der Bevölkerung die Beobachtung eventuell auftretender sichtbarer Veränderungen der Pflanze(n) ermöglicht. Hierdurch wird eine Information der Bevölkerung über etwaige aufgetretene Schäden, in deren Folge eine erhöhte Radioaktivität auftrat, sichergestellt und eine Verheimlichung solcher Schäden praktisch hintangehalten. Durch Augenschein oder auch durch Fernsehübertragung kann die Bevölkerung laufend über den Zustand der Pflanze(n) informiert gehalten werden, wodurch Veränderungen dieser Pflanze(n) der Bevölkerung zur Kenntnis gelangen. Ein etwaiges Mißtrauen der Bevölkerung, wie es bei der Verwendung von elektronischen, elektrischen und mechanischen Anzeigegeräten - die manipulierbar sind - auftreten kann, ist damit ausgeschlossen. Eine wesentliche, weitere Verbesserung gegenüber dem genannten Lüftungsverfahren für Atomreaktoren wird erfindungsgemäß in vorteilhafter Weise dadurch geschaffen, daß die dem erfindungsgemäßen Verfahren zugrundeliegende Beweisbarkeit der Sicherheit atomtechnischer Anlagen äußerst positiv während des Betriebes öffentlich vorgezeigt werden kann, jedoch bei einem eventuellen Austritt von Radioaktivität in einem Bauwerksraum dieser Störfall der Bevölkerung mit Hilfe der erfindungsgemäßen Verfahrensmaßnahmen und gemäß dem Naturgesetz jeder zur Kontrolle, z.B. als Bioindikator eingesetzten Pflanze, durch ihre Reaktion diese vorgeführt werden kann. Die der Kontrolle durch (eine) Pflanze(n) zugrundeliegende Verfahrensidee fußt ja auf der Überlegung, daß auf der Erde

2

jegliches Leben erst durch das Wachstum der Pflanzen ermöglicht wurde, somit umgekehrt, daß das ordnungsgemäße Gedeihen von Pflanzen den heute so wichtigen Hinweis auf eine intakte Umwelt gibt. Den Gesellschaften, die kerntechnische Anlagen betreiben, wird es mit Hilfe der Verfahrensmaßnahmen ermöglicht, ihre übernommene und teils weiterentwickelte Sicherheitstechnik, von der sie selbst in allen Details am besten Bescheid wissen und überzeugt sind, kontinuierlich während des Betriebes kerntechnischer Anlagen mit Hilfe der Verfahrenseinrichtungen in einem nahegelegenen Gewächshaus in umweltidealer bzw. umweltfreundlicher Ausgestaltung Pflanzenkulturen der Bevölkerung durch gesund gedeihende Pflanzengewächse die Sicherheit der Bauwerke kerntechnischer Anlagen transparent und beweiskräftig zu präsentieren.

Gemäß der weiteren Ausgestaltung der Erfindung wird die Absaugung der Luft bei Kernkraftwerken od.dgl. aus einem oberhalb des Reaktors gelegenen Bereich und bzw. oder entlang von radioaktives Medium führenden Druckleitungen und bzw. oder nahe der Decke des Bauwerkes od.dgl., insbesondere von Arbeits- und Lagerräumen kerntechnischer Wiederaufbereitungs- und Versuchsanlagen, Zwischen- und Endlagerstätten vorgenommen.

Entnommen wird dazu aus kerntechnischen Anlagen die Gebäudeluft außerhalb des Containments entlang der Druckleitungen, Pumpenanlagen, gelagerten Endlagerbehältern bis nahe unter der Decke von Bauwerks- und Nebenräumen u.dgl., die bei einem Störfall mit Austritt von Radioaktivität auch die kontaminierte Atemluft der Beschäftigten in den Bauwerksräumen ist, die sich verteilt und bis zur Decke aufsteigt, wie das bei solchen Störfällen bereits der Fall war. Dadurch werden besonders kritische Bereiche in die überwachung einbezogen. Die solcherart entnommene Luft wird in einem geschlossenen System hochdruckverdichtet, somit pro Volumeneinheit wesentlich höher konzentriert als aufgenommen, und unter diesem Hochdruck einem Detektor im Gewächshaus einem Rohrsystem mittels Rohrleitungen zugeführt, und anschließend wieder in die Bauwerksräume zurückgeleitet, womit das Verfahrenssystem wieder geschlossen wird.

Der Detektor gestattet den Transport der Gammaaktivität von seinem Rohrinneren nach außen auf die Pflanze(n), welcher ähnlich der Basis eines Bionikverfahrens funktioniert und daher völlig neuen Verfahrens- und Konstruktionsprinzipien im Vergleich zu den eingangs genannten Lüftungsverfahren für Atomreaktoren unterworfen ist. In der Folge funktioniert es naturgemäß ohne technische Meßgeräte ; auch werden keine Fachleute, z.B. Physiker zur Beurteilung benötigt. Das Medium Luft kann während des Betriebes einer atomtechnischen Anlage in einem nahegelegenen Gewächshaus aus Glas mit den Verfahrensleitungen und -einrichtungen zur Anzeige an die Pflanze(n) herangeführt und der Bevölkerung zugänglich und einsehbar, somit visuell wahrnehm- und überprüfbar, öffentlich präsentiert werden. Da die Intensität der Strahlung, die zur Einwirkung auf die Pflanze(n) gelangt, durch die Verdichtung der Luft - unter Voraussetzung konstanter Temperatur - auch in einem der Verdichtung entsprechenden Verhältnis gesteigert wird, wird (werden) die Pflanze(n) einer gegenüber der Radioaktivität im Bauwerk erhöhten Strahlungsdosis ausgesetzt, sodaß Veränderungen der Pflanze(n) schnell auftreten und in einer vertretbaren Zeitverschiebung gegenüber dem Eintrittszeitpunkt des Schadensfalles sicht- und damit erkennbar werden. Vorteilhaft wird erfindungsgemäß gasförmiges Medium, insbesondere Luft, auf mindestens $5.10^6$ Pascal (50 bar), vorzugsweise etwa $1.10^7$ Pascal (100 bar), verdichtet.

Bei einem Verfahrensdruck von beispielsweise 100 bar kommt es bekanntlich bei konstanter Temperatur zu einer Volumenverminderung auf etwa 1/100 des Wertes vor der Verdichtung. So ist es jedermann möglich, z.B. Farbänderungen von grün zu gelb oder braun, sowie ein Wuchern, ein Altern und Verwelken oder Zusammenschrumpfen, wie auch Nadelverluste u.a. festzustellen. Eine Höchstgrenze für den Druck ist aus verfahrensgemäßer Sicht nicht gegeben und der Verfahrensdruck kann somit beliebig hoch - innerhalb der festigkeitsmäßigen Grenzen sowie innerhalb der Grenzen der noch erzielbaren Verdichtung - gewählt werden.

Durch diese erfindungsgemäße Maßnahme kann (können) daher die Pflanze(n) einer durch die radioaktive Strahlungssubstanz transportierten Höchstdosierung pro Zeiteinheit ausgesetzt werden, wodurch man auf Gewächse verzichten kann, die schwierig zu züchten sind.

Die Zeit zwischen Störfallbeginn und Auftreten der Veränderungen der Pflanze(n) kann durch die Verdichtung der abgesaugten Luft und durch die technisch gestattete, geringe Rohrwandkonstruktion des Detektors im Vergleich zu dem aus der EP-B 1-0110 867 bekannten Verfahren bedeutend herabgesetzt werden, bei dem eine Beschichtung des Bauwerkes mit Pflanzen versehen wird oder diese Pflanzen in einem auf dem Dach des Bauwerkes errichteten Glashaus untergebracht werden, so daß die Radioaktivität pro Zeiteinheit erst in abgeschwächter Form - bedingt durch die Abschirmung der Mauern des Bauwerkes bzw. der Beschichtung - auf die Pflanzen einwirken kann.

Nach dem erfindungsgemäßen Verfahren hingegen gelingt es, vollkommen unabhängig von den zum Teil sehr dicken Wandstärken einzelner Bauwerke, die Anzeige des Austritts radioaktiver Strahlung sehr rasch zu sichern.

Es liegen bereits Untersuchungen über Veränderungen, auch über visuell wahrnehmbare Veränderungen, an Pflanzen vor. Diese Untersuchungen zeigen vor allem die Empfindlichkeit von Nadelgehölzen. Dabei wurde eine Dosisleistung von wenigen Zehntel rem/h schon als kritisch gefunden. Die Empfindlichkeit von Pflanzen hängt auch innerhalb einer Pflanzenart vom Entwicklungszustand des Organismus ab; jüngere Pflanzen sind strahlenempfindlicher als alte, chronische Bestrahlung wird zum Teil besser ertragen als eine akute; weiter zeigen Meßdaten, daß Pflanzen in Wachstumsruhe viel widerstandsfähiger sind als Pflanzen im aktiven Wachstum. Messungen des Volumens von Interphasekernen im Meristem von Sproßspitzen, ausgeführt zu verschiedenen Zeiten im Verlauf eines Jahres, zeigen ein großes Volumen während des aktiven Wachstums und viel kleinere Volumina während der Wachstumsruhe. Die Daten machen es sehr wahrscheinlich, daß die Unterschiede in der Empfindlichkeit ruhender im Vergleich zu aktiv wachsenden Pflanzen das Ergebnis von Unterschieden im Kernvolumen sind (A.H. Sparrow, L.A. Schairer, Rhoda C. Sparrow und W.F. Campell in Radiation Botany 1963, Bd.3, Seiten 169 - 173; Pergamon Press Ltd.). Im erfindungsgemäßen Verfahren kommen diese zusätzlichen "Streßbelastungen", insbesondere an jungen Pflanzen, auch in der Wachstumsphase zur Anwendung. Der sensibelste Bereich der Pflanzenzelle ist deren Kern. Damit mag zusammenhängen, daß eine Korrelation zwischen der Strahlenempfindlichkeit eines Organismus und dessen Kernvolumen (Volumen der Interphase-Chromosomen) existiert. Dies wiederum erklärt die hohe Anfälligkeit der Coniferen, deren Chromosomenvolumen mit bis zu ca. 50 $\mu$m$^3$ nur von wenigen Arten übertroffen wird. Zahlreiche Autoren stimmen in der Ansicht überein, daß beispielsweise speziell die "Nordamerikanischen Coniferen" zu den strahlenempfindlichen Pflanzen zu rechnen sind (siehe die nachfolgende Tabelle!).

TABELLE: (Aus G.M. Woodwell, "The Biotic Effects of Radiation" Ambio Vol 11; Seite 143 - 148; 1982)

EMPFINDLICHKEIT VERSCHIEDENER (NORDAMERIKANISCHER) CONIFEREN GEGENÜBER EXTERNER BESTRAHLUNG.

| Art | Daten in rem | |
|-----|-----|-----|
| | Minimaldosis für sichtbare Schädigung | Tödliche Dosis |
| 1.) Pinus lambertiana | 150 | 410 |
| 2.) Pinus tarta | 170 | 450 |
| 3.) Pinus jeffreyi | 190 | 490 |
| 4.) Pinus rigida | 190 | 490 |
| 5.) Pinus strobus | 190 | 500 |
| 6.) Pinus resinosa | 210 | 540 |
| 7.) Picea glauca | 220 | 590 |
| 8.) Pinus ponderosa | 240 | 640 |
| 9.) Abies balsamea | 270 | 700 |
| 10.) Abies lasiocarpa | 270 | 700 |
| 11.) Abies grandis | 270 | 710 |
| 12.) Pseudotsuga menziesii | 310 | 820 |
| 13.) Picea engelmannii | 330 | 880 |
| 14.) Tsuga heterophylla | 377 | 990 |

Gemäß der Erfindung wird (werden) als Strahlendetektor(en) (eine) Pflanze(n) der Art bzw. Familie Nordamerikanische Coniferen, vorteilhaft der Gattung Pinus strobus (Wheymouthskiefer) sowie zusätzlich Pinus monophylla verwendet.

In Veröffentlichungen folgen meist Angaben über die Gesamtdosis, die erste sichtbare Schäden oder aber das Absterben der Pflanzen verursachen. So gilt für Pinus monophylla, daß bereits bei 15 rem das Spitzenwachstum nachläßt und oberhalb 50 rem Nadelverluste auftreten. Verwendet man statt der summarischen Dosis-Angaben die Dosisleistung, so ergeben sich für die untersuchten Pinus-Arten etwas unterschiedliche Daten. Eine Veränderung des Nadellängewachstums wurde bereits bei 50 mrem/h beobachtet. Eine weitere bei extrem schwacher Gammaexposition am nordamerikanischen Braunwurzgewächs Penstemon virens durchgeführte Untersuchung zeigte bei einer chronischen Bestrahlung mit max. 0,4 mrem/h bereits deutliche Anomalien.

Noch sensibler sind: Antirrhinum majus (Löwenmäulchen) mit 75 $\mu$m$^3$ Kernvolumen, die Tradescantia ohiensis mit 800 $\mu$m$^3$, sowie die Tradescantia paludosa mit zum Teil größer als 1000 $\mu$m$^3$ Kernvolumen, sowie die Lilium testaceum mit einem Kernvolumen von 1800 $\mu$m$^3$, wobei bereits bei 7 mrem/h somatische Mutationen und somit auffallende Wachstumsänderungen auftreten. Bei Anwendung des erfindungsgemäßen Verfahrens ist vor allem die akute Indikation durch die Gammadosisleistung von Bedeutung, die auf die Pflanze(n) und Wurzeln ohne Erholungsphase bis zur optisch sichtbaren und natürlich auch meßbaren Schädigung einwirkt.

Nach einer Veröffentlichung der Radiation Botany 1963, Bd. 3, Originaltitel: The radiosensitivity of Gymnosperms. I. The Effects of Dormancy on the response of "Pinus strobus" seedlings to acute gamma irradiation (Biology Department, Brookhaven National Laboratory, New York) sind optisch sichtbare Veränderungen an Pinus strobus (Wheymouthskiefer) nach abgestuften, relativ geringen Gammaexpositionen signifikant.

Verschiedene Versuche und Messungen hat man durchgeführt; z.B. wurden 20 - 30 cm hohe Keimlinge von Pinus strobus für 16,5 h einer Gammaexposition ausgesetzt. Der Einfluß auf das Wachstum ist durch Längenmessungen bis unter die halbe Nadellänge und schließlich bis zu deren totalen Verlust festgehalten worden. Weiters folgten Tests an Pinus strobus bei einem Meßintervall von 5 Wochen. Entnommen wurden 3 - 4 Jahre alte Keimlinge und einer akuten Gammabestrahlung von weniger als 15 Minuten einer Strahlungsdosis von a) 150r, b) 300r, c) 600r und d) 1200r ausgesetzt und ihre Entwicklung nach 5 Wochen im Vergleich zur Höhe der Kontrollpflanzen mit für a) ca. 77 %, für b) ca. 60 %, für c) kleiner 40 %, für d) kleiner 40 % festgestellt. Eine 10%-ige Änderung in der Höhe ist bereits visuell gut wahrnehmbar.

Vorteilhaft wird (werden) erfindungsgemäß von der(n) dem Einfluß der radioaktiven Strahlung ausgesetzten Pflanze(n) zumindest weitestgehend strahlensicher getrennt, insbesondere im außerhalb des Kernkraftwerkes od.dgl. angeordneten Nebengebäude, vorteilhaft Gewächshaus, insbesondere Glashaus, (eine) Kontrollpflanze(n) gleicher Art bzw. Familie und gegebenenfalls gleicher Wachstumsphase in ebenfalls für die Öffentlichkeit zugänglicher und einsehbarer Weise zu Vergleichszwecken eingesetzt.

Hierdurch ist es möglich, (eine) unbelastete Kontrollpflanze(n) gleichzeitig mit (einer) Pflanze(n) zu beobachten, die dem Einfluß einer etwaigen radioaktiven Strahlung unterliegt (unterliegen).

Bei Anwendung des erfindungsgemäßen Verfahrens kann die Luft mit hohem Druck dauernd zur Einwirkung auf die Pflanze(n) gebracht werden, wobei der Druck mittels eines Druckregelventils auf den erforderlichen Druck einstellbar und mittels Druckmeßgerät kontrolliert wird. Damit wird sichergestellt, daß jedes Rohr mit dem gewünschten Betriebsdruck beaufschlagt wird.

Vorteilhaft erfolgt gemäß der Erfindung die Mediumableitung, insbesondere Luftabsaugung, intermittierend, wobei in den Förderpausen der Druck im wesentlichen auf dem vor der Förderpause erreichten Niveau mittels eines Druckregelventils mit Druckanzeigegerät und mittels zweier etwa parallel wirkender Schaltventile, von denen je eines vor dem Verteilerblock am Eingang und nach dem Sammlerblock am Ausgang des Nebengebäudes, vorteilhaft Gewächshaus, insbesondere Glashaus, angeordnet ist, gehalten wird. Dadurch ist sichergestellt, daß in den Förderpausen, die etwa bis zu einer Stunde dauern können, das in verdichtetem Zustand zur Einwirkung auf die Pflanze(n) gelangende Medium in den Rohren bzw. Rohrsystem im Bereich der Pflanze(n) keinen Druckabfall erleidet, die Pflanze(n) somit auch in den Förderpausen einer davor vorhanden gewesenen Strahlenbelastung ausgesetzt bleibt (bleiben).

Zur nachfolgenden Mediumsförderung aus den Bauwerksräumen reicht ein 5-10 Minuten dauernder Spülvorgang aus, wobei das Schaltventil ausgangsseitig am Sammlerblock zur Druckentspannung zu öffnen und hernach zur Druckerfüllung zu schließen ist. Während dieser Druckerfüllung mittels Verdichter und Niederdruckfördergerät muß das eingangsseitige Schaltventil am Verteilerblock geöffnet und nach Erreichen des Betriebsdruckes in den Rohren bzw. im Rohrsystem im Nebengebäude, vorteilhaft Gewächshaus, insbesondere Glashaus, sind dieses Schaltventil zu schließen und der Verdichter sowie das Niederdruckfördergerät gleichzeitig abzuschalten. Damit ist sichergestellt, daß der gewünschte Betriebsdruck des verdichteten Mediums bis zum Spülvorgang nach etwa einer Stunde aufrechterhalten wird. Die vorliegende Erfindung betrifft weiter eine Anlage zum Nachweis des Austritts radioaktiver Strahlung in radioaktiv strahlende Substanzen enthaltenden Bauwerken kerntechnischer Anlagen, z.B. Kernkraftwerken od.dgl.. Dabei ist erfindungsgemäß nahe dem radioaktiv strahlende Substanzen enthaltenden Bauwerk od.dgl. ein Nebengebäude, vorteilhaft Gewächshaus, insbesondere Glashaus angeordnet, welches (eine) unter dem Einfluß radioaktiver Strahlung Veränderungen der Erscheinungsform zeigende Pflanze(n) aufnimmt, und der(n) Pflanze(n), insbesondere jeder Pflanze, ein Rohrsystem, zweckmäßig ein schraubenlinienförmig gewundenes Rohr und bzw. oder ein mäanderartig gewundenes Rohr zugeordnet ist, wobei die Pflanze(n) in dem vom Rohrsystem bzw. Rohr umschlossenen Raum angeordnet ist (sind) und vorteilhaft Teile bzw. Äste des Rohrsystems bzw. schraubenlinienförmig bzw. mäanderartig gewundenen Rohres Erzeugende eines (fiktiven) Zylinders oder Kegelstumpfes sind, und das Rohrsystem bzw. die Rohre mit der Druckseite mindestens eines Kompressors, bevorzugt über einen angeschlossenen Verteilerblock mit Zulaufleitungen zu den Rohren, in Verbindung stehen, und der Kompressor mit Medium, insbesondere Luft, aus Räumen des die radioaktiv strahlenden Substanzen enthaltenden Bauwerks od.dgl. versorgt wird. Der Druck in den schraubenlinienförmig bzw. mäanderartig gewundenen Rohren beträgt dabei bevorzugt $1 . 10^7$ Pascal (100 bar). Mit derart unter diesem Druck stehender Luft aus Räumen kerntechnischer Anlagen werden die Rohre durch den Kompressor beaufschlagt, dem die Luft aus den Bauwerksräumen mittels eines Niederdruckfördergerätes bis $1,6 \cdot 10^6$ Pascal (16 bar) zugeführt wird. Für die Führung des Mediums kann die Wandstärke des Hochdruckrohrleitungssystems z.B. aus nichtrostendem Werkstoff sehr klein gehalten werden. Eine unerwünschte Abschirmung wird durch diese geringe Wandstärke vermieden. Werden schraubenlinienförmig und mäanderartig gewundene Rohre gemeinsam verwendet (kombiniertes Rohrsystem), so wird das mäanderartige Rohr innerhalb des vom schraubenlinienförmig gewundenen Rohr umschlossenen Raumes angeordnet. Fall-weise können mehrere Pflanzen durch diese Anordnung umschlossen werden, was allerdings nur für kleinere Gewächse zu empfehlen ist.

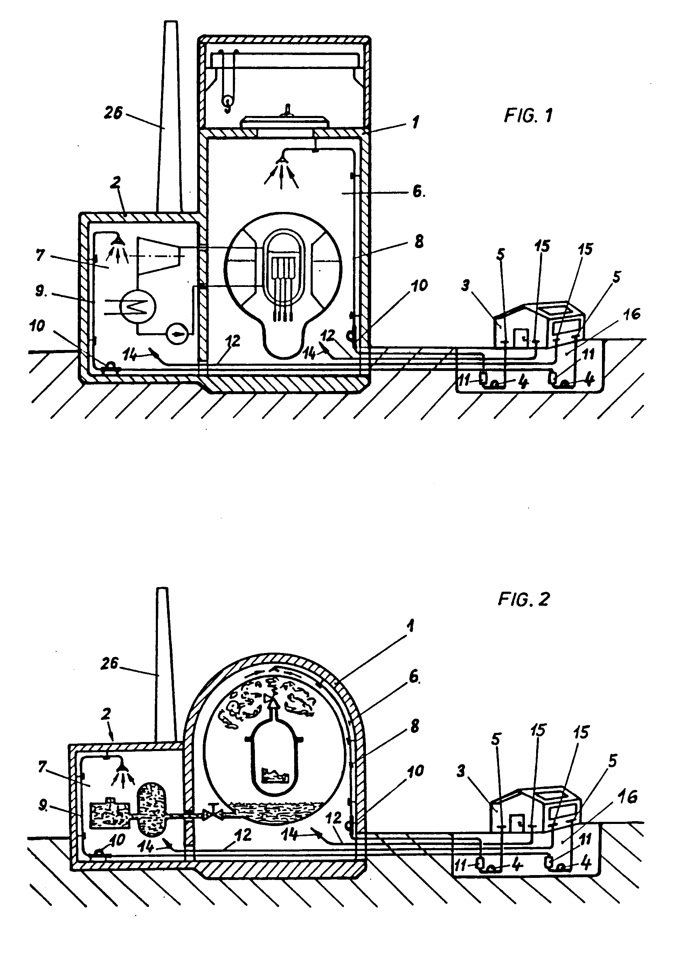

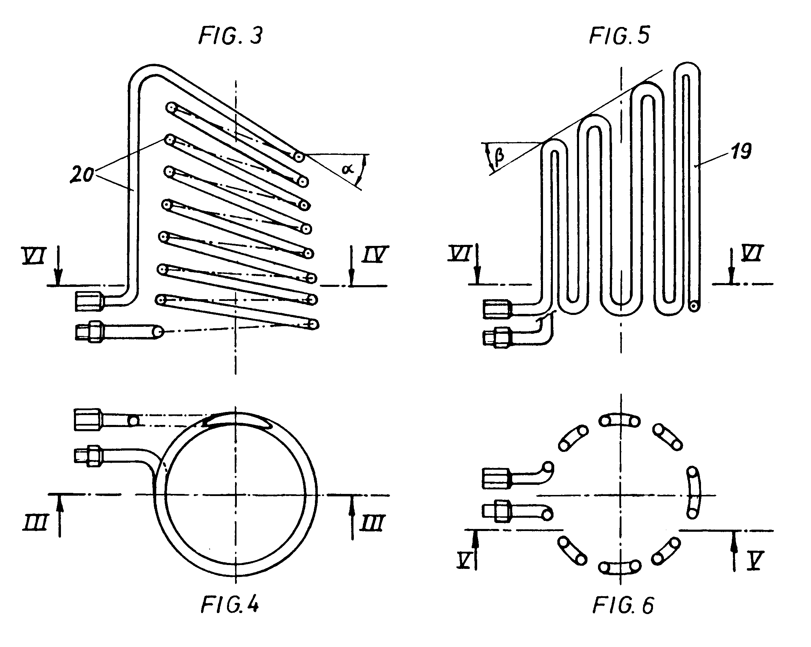

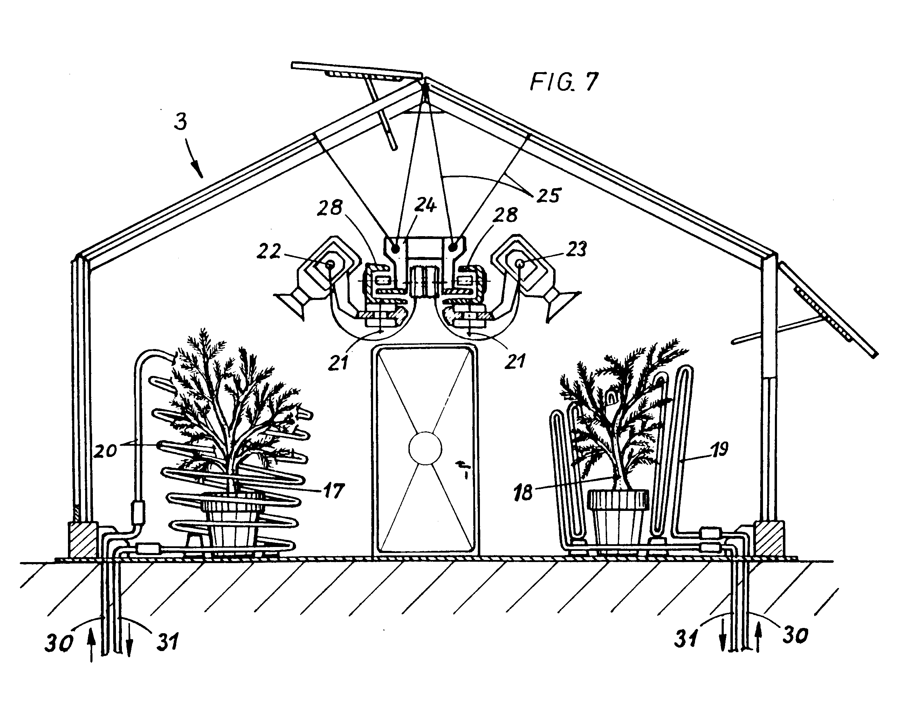

Die Erfindung wird nachstehend an Hand der Zeichnungen beispielsweise erläutert. Es zeigen Fig.1 einen im wesentlichen vertikalen Schnitt durch ein radioaktiv strahlende Substanzen enthaltendes Bauwerk samt Gewächshaus, Fig.2 analog Fig.1 einen im wesentlichen vertikalen Schnitt mit gegenüber Fig.1 geänderter Gestaltung des Bauwerks, die Fig.3 bis 6 Details von zur Verwendung in einem Gewächshaus bestimmten Elementen, das in einem vertikalen Querschnitt in Fig.7 dargestellt ist.

In der Zeichnung ist mit (1) und (2) ein radioaktiv strahlende Substanzen enthaltendes Bauwerk einer kerntechnischen Anlage bezeichnet, wobei z.B. mit (1) das Hauptgebäude eines Kernkraftwerkes bezeichnet ist; es kann auch eine Wiederaufbereitungs- und Versuchsanlage, eine Zwischen- und Endlagerstätte über und unter der Erde sein. Hier ist es die beispielsweise Darstellung des Hauptgebäudes mit dem Reaktor eines Kernkraftwerkes in Blockbauweise. Mit (2) ist das dazugehörige Nebengebäude bezeichnet, welches für mehrere Funktionen bestimmt ist, beispielsweise als Maschinenraum, Aufbereitungsgebäude und ähnliches dient. Im Abstand zum Bauwerk (1, 2) befindet sich ein Gewächshaus (3), das im Detail in Fig.7 dargestellt ist. Bei der Ausführungsform gemäß Fig.2 ist das Reaktorgebäude (1) mit halbkugelförmigem Dach ausgebildet. Das Nebengebäude ist wieder mit (2) bezeichnet. (3) stellt das Gewächshaus analog der Fig.1 dar. Darunter befindet sich der Geräteraum (16). Wie Fig.7 erkennen läßt, dient das Gewächshaus (3) dazu, unter dem Einfluß radioaktiver Strahlung Veränderungen der Erscheinungsform zeigende Pflanze(n) (17) und (18) aufzunehmen. Die Pflanze (17) ist dabei von einem schraubenlinienförmig gewundenen Rohr (20) umschlossen. Die Pflanze (18) ist von einem mäanderartig gewundenen Rohr (19) umschlossen, wobei dieses mäanderartig gewundene Rohr (19) Äste besitzt, die Erzeugende eines Kegelstumpfes sind (Rohr (19) und (20) sind Prozeßleitungen). In der Darstellung gemäß Fig.7 handelt es sich um einen Kegelstumpf, der sich nach oben öffnet. Es kann auch längs eines fiktiven, zylindrisch angeordneten, mäanderartig gewundenen Rohr verwendet werden, wie ein solches in den Fig.5 und 6 dargestellt ist. Fig.5 veranschaulicht hierbei einen Schnitt entlang der Linie V-V in der Fig.6, welche einen Querschnitt VI-VI durch das mäanderartig gewundene Rohr (19) in Fig.5 darstellt. Das schraubenlinienförmig gewundene Rohr (20) umschließt in der Darstellung gemäß Fig.7 einen fiktiven Kegelstumpf, der sich nach oben öffnet. Es ist jedoch auch möglich, das schraubenlinienförmig gewundene Rohr zylindrisch oder so anzuordnen, wie dies aus den Fig.3 und 4 ersichtlich ist, wobei, wie Fig.3 erkennen läßt, das schraubenlinienförmig gewundene Rohr (20) einen sich nach oben zu verengenden Kegelstumpf umschließt, Fig.3 ist hierbei ein Schnitt entlang der Linie III-III in Fig.4, welche einen Schnitt entlang der Linie IV-IV in Fig.3 darstellt.

Das schraubenlinienförmig gewundene Rohr gemäß den Darstellungen in Fig.3 und Fig.7 endet oben in einer Ebene, die mit der Horizontalebene einen Winkel Alpha einschließt. Analog endet das mäanderartig gewundene Rohr oben in einer Ebene, die mit einer Horizontalebene einen Winkel Beta einschließt. In der Anlage nach der Erfindung enden die Rohre, das schraubenlinienförmig gewundene Rohr bzw. das mäanderartig gewundene Rohr, insbesondere das kombinierte Rohrsystem, in einer Ebene, die mit der Horizontalebene einen Winkel von mindestens 30° einschließen und in die Zuund Ablaufleitungen (30), (31) zu den Rohren (19), (20) bzw. Rohrsystem ist je ein Absperrventil eingebaut. Es ist auch möglich - in nicht dargestellter Weise - das mäanderartig gewundene Rohr (19) in einem Raum zu stellen, der von einem zylindrischen oder konisch sich nach oben oder unten erweiternden, schraubenlinienförmig gewundenen Rohr (20) gemäß den Fig.3 und 4 gebildet wird. Äste von Pflanzen (17) oder (18) können dann durch die Zwischenräume des mäanderartig gewundenen Rohres (19) hindurchtreten und zum Rohr (20) gelangen und dabei unmittelbar mit den Rohrschlangen in Berührung kommen.

Um die erfindungsrelevanten Auswirkungen radioaktiver Strahlen auf Pflanzen zu eruieren, über welche noch keine diesbezüglichen Angaben vorliegen, ist es gegebenenfalls erforderlich, Tests an Pflanzen (17,18) unter gleichen Bedingungen wie sie im erfindungsgemäßen Verfahren im Glashaus (3) gegeben sind, bevorzugt mit den kombinierten Rohren (19 und 20), also mit dem spiralkreisförmigen Rohr (20) außen, und dem inneren mäanderartig gewundenen Rohr (19) mit in deren Kreiszentrum stehender Pflanze (17 oder 18), die von Wurzel bis zu Spitzen radioaktiver Strahlung ausgesetzt ist, durchzuführen. Diese Tests sind vor allem für die Erstausrüstung des Gewächshauses mit Pflanzen (17,18) von Bedeutung, sofern hierfür Pflanzen verwendet werden, die hinsichtlich der Beeinflussung durch Radioaktivität noch nicht untersucht wurden, sodaß noch nicht bekannt ist, ab welcher Strahlungsdosis in welcher Zeit die Pflanze(n) (17,18) visuell sichtbare Veränderungen zeigt (zeigen).

Bevorzugt können Radionuklide, z.B. kontaminiertes Argon, Krypton oder Xenon, die sich bei einer Reaktorschnellabschaltung in Kernkraftwerken bilden, den Rohren (19,20) zugeführt werden. Reaktorschnellabschaltungen ereignen sich mehrmals jährlich und sind einer dem Abluftkamin (26) vorgeschalteten Warteschleuse entnehm- und transportierbar und anschließend bevorzugt den kombinierten Rohren (19,20) mit mindestens $5.10^6$ Pascal (50 bar), bevorzugt 100 bar, zuzuführen, um eine Äquivalentdosisleistung von 5 rem/h oder höher an die Testgewächse (17,18) zur Voruntersuchung zu liefern. Um die Abgabe des hohen Ausstoßes der Radionuklide , die auch Spikes genannt werden und in der Regel nur kurzzeitig, etwa 30-60 Minuten andauert, zeitlich für aussagefähige Testergebnisse zu verlängern, wird erfindungsgemäß vorgeschlagen, in die Zu- und Ablaufleitungen (30,31) zu den Rohren je ein Absperrventil einzubauen. Damit kann das verdichtete, kontaminierte Medium zwischen beiden Ventilen eingeschlossen und lange Zeit druckdicht gehalten werden und dabei auf (die) Pflanze(n) trotz Halbwertszeiten einwirken. Der vor dem Ventil gelegene Abschnitt der Druckleitung mit z.B. dem Verdichter ist zu entlüften. Dabei sind die Veränderungen der Pflanze(n) und des(r) zu definierenden, zukünftigen Bioindikators(en) in Instituten bzw. Labors in allen Phasen wissenschaftlich festzuhalten und zu dokumentieren.

Die Rohre (19) und (20) sind mit der Druckseite mindestens eines Kompressors (4) in Verbindung. Die Verbindung erfolgt dabei bevorzugt über einen an die Druckseite des Kompressors (4) angeschlossenen Verteilerblock (5) mit Schaltventil im Gewächshaus. Der Kompressor (4) wird mit Luft aus den Räumen (6, 7) (Fig. 1 und 2) des die radioaktiv strahlende Substanzen enthaltenden Bauwerkes (1, 2) versorgt. Die Versorgung des Kompressors (4) mit Luft aus den Bauwerksräumen (6, 7) erfolgt dabei über Leitungen (8, 9), welche an ein Niederdruckförderaggregat (10) angeschlossen sind, welches in die Behälter (11) weiterfördert, die über Leitungen mit der Ansaugseite der Kompressoren (4) verbunden sind. In den Behältern (11) kann dabei ein Druck von bis zu 16 bar herrschen.

Vorteilhaft ist erfindungsgemäß zwischen einander benachbarten Windungen der Rohre (19, 20) ein Abstand vorhanden, der ein Mehrfaches des Rohraußendurchmessers betragen kann, und das Rohrsystem ist, insbesondere sind die schraubenlinienförmig und bzw. oder mäanderartig gewundenen Rohre (20, 19) mit seinem bzw. ihrem Rücklauf bevorzugt über einen Sammlerblock (15) mit Druckanzeigegerät, Druckregelventil und Schaltventil zum Halten des Druckes in den Förderpausen und nachfolgendem Öffnen, mit in die Räume des Reaktor- oder Wiederaufbereitungsbauwerkes u.dgl. (1,2) führenden Leitungen verbunden, die in den Räumen (6,7) des die radioaktiv strahlenden Substanzen enthaltenden Bauwerkes od.dgl. enden und aus welchem das Medium, insbesondere die Luft,bevorzugt über eine am Rohrende befestigte Austrittsöffnung (14), in die Räume des Bauwerkes zurückgeführt wird. Zwischen einander benachbarten Windungen der Rohre (19) und (20) ist ein Abstand vorhanden, der ein Mehrfaches des Rohraußendurchmessers betragen kann. Durch diese Maßnahme wird sichergestellt, daß die Pflanze(n) problemlos einsehbar ist (sind) und die Äste zwischen den Rohrwindungen, diese berührend hindurchwachsen können, dort besonders intensiv der radioaktiven Strahlung ausgesetzt ist (sind) und damit an diesen Stellen primär Änderungen der Erscheinungsform optisch sichtbar werden.

Es ist bekannt, daß die Strahlung quadratisch mit der Entfernung von der Strahlungsquelle abnimmt. Gammastrahlen durchdringen dabei nicht nur Pflanzen, sondern auch Stahlwerkstoffe. Um möglichst rasche Veränderungen der Pflanze(n) (17) und (18) zu erzielen, wird vorzugsweise das kombinierte Rohrsystem mit außenliegendem Rohr (20) und dem innenliegenden zugehörigen Rohr (19) ausgeführt. Dadurch wird zusätzlich vom Innenrohr (19) Strahlung erzeugt, die zur Einwirkung auf die Pflanze(n) (17) und (18) gelangt , wobei, wenn es sich um Nadelgewächse handelt, die Nadeln der Gewächse in direktem Kontakt mit dem mäanderartig gewundenen Rohr (19) stehen können. Auf diese Weise wird ohne Abstand zur Strahlungsquelle eine maximale Äquivalentdosisleistung zur Einwirkung auf die Pflanze(n) (17,18), dem(n) wissenschaftlich zu definierenden Bioindikator(en) für den verfahrensgemäßen Einsatz, gebracht.

Näherungsrechnung: Vorgabe: Gas auf 100 bar verdichtet, Rohrwerkstoff: rostfreier Stahl, Rohraußendurchmesser: ca. 17,3 mm oder kleiner, Rohrwandstärke: 1,6 mm, zugehöriger Abschirmfaktor: ca. 0,93 Annahme: Im Aufnahmeraum werden 0,5 rem/h adäquat zu Pflanzen aufgenommen, d.i. 1/10 des Wertes der für das Personal vieler kerntechnischer Anlagen pro Jahr regelgemäß zugelassen ist. Somit folgt: 0,5 mal 100 mal 0,93 = 46,5 rem/h Äquivalentdosisleistung. 1 rem ist dabei einem rad (rd) und dieses wieder einem Röntgen (R) äquivalent. 100 rem entsprechen einem Sievert, der heute gültigen Einheit. Nach 12 Stunden errechnen sich 558 rem, nach weiteren 12 Stunden, somit nach dem ersten Tag ohne Annahme einer stündlichen Zunahme der angenommenen Äquivalentdosisleistung bereits 1116 rem. Gemäß diesem Rechenexempel kann gerundet ausgedrückt werden: Pro Tag sind es 1111 rem summarisch, nach dem 2. Tag 2222 usw.! In Harrisburg stieg beim Störfall am 28.3.1979 die Dosisleistung der gasförmigen Spaltprodukte in der Luft im KKW von anfangs 10 rem/h auf 80 und weiter auf 30.000 rem/h in der Kuppe an!

Die Pflanze(n) (17,18), kann man gegebenenfalls, was bisher in Experimenten kaum eruiert wurde, insbesondere von der Wurzel bis zu den Spitzen örtlich nahezu ohne Abstand zur Strahlungsquelle und vor allem ohne Erholungsphase, bis zur möglichen biologischen Mortalität belasten und dabei ihre sichtbaren Veränderungen erkennen. Primär z.B. bereits bei Tests an: Pinus lambertiana; P. rigida; P. strobus; P. monophylla; Penstemon virens; Antirrhinus majus; Lilium testaceum und viele weitere in der Tabelle genannten Pflanzen. Die schraubenlinienförmig und bzw. oder mäanderartig gewundenen Rohre sind mit ihrem Rücklauf bevorzugt unter Zwischenschaltung eines Sammlerblocks weiters mit einem Druckregelventil, einem Druckanzeigegerät (Manometer) und einem weiteren Schaltventil zum annähernd gleichzeitigen Öffnen und Schließen (z.B. pro Glashaushälfte) zu versehen, wobei das Schaltventil im geschlossenen Zustand zum Halten des Drucks während der Förderpausen sowie zum nachfolgenden Öffnen und Entspannen des Druckes dient, und mit den in Räume des kerntechnischen Bauwerks führenden Leitungen verbunden sind, die in den Räumen enden, aus welchen die Luft, bevorzugt über eine am Rohrende befestigte Austrittsöffnung, in die Räume zurückgeführt wird. Diese Ausführungsform stellt sicher, daß etwaige kontaminierte Luft, die zum Zwecke einer Anzeige den Pflanzen zugeführt wurde, nicht in die Umgebung gelangt. Der Austrittsöffnung (14) können strömungs- und schalldämpfende Einrichtungen zugeordnet sein.

Jedes Rohr des Rücklaufs ist vom Pflanzenplatz zu dem gegebenenfalls vorgesehenen Sammlerblock (15) zu führen, der mit den vorgenannten Armaturen mit deren Funktion auszustatten ist, wie ein Druckregelventil zum Einstellen des gewünschten Betriebsdruckes, ein Druckmeßgerät (Manometer) und ein Schaltventil, das zum Halten des Druckes in den Förderpausen und zum nachfolgenden Entspannen des Druckes geeignet ist und das vor die Leitungen (12) zu schalten ist.

Vorteilhaft sind nach der Erfindung für die Erstausrüstung mit der(n) Pflanze(n) im Nebengebäude, vorteilhaft Gewächshaus, insbesondere Glashaus, gemeinsam mit den Rohren, bevorzugt mit dem kombinierten Rohrsystem, Tests durchzuführen, wobei gemessene bzw. geprüfte radioaktive Strahlung der Radionuklide, z.B. kontaminiertes Argon, Krypton oder Xenon, die sich bei mehrmals jährlich ereignenden Reaktorschnellabschaltungen in Kernkraftwerken bilden, den Rohren unter Druck bis zu 100 bar zugeführt werden, um eine Äquivalentdosisleistung von 5 rem/h oder höher an die Testgewächse zur Voruntersuchung zu liefern.

Zweckmäßigerweise ist erfindungsgemäß in das Nebengebäude, vorteilhaft Gewächshaus, insbesondere Glashaus (3), mindestens eine Fernsehkamera (22,23) zur Bildübertragung nach außen eingebaut, die auf einem Schlitten (28) angeordnet und auf einer Schiene (24) verfahrbar gelagert ist, wobei die Schiene (24) sich vorzugsweise in Längsrichtung des Glashauses (3) erstreckt, und die Fernsehkamera (22,23) auf dem Schlitten (28) räumlich schwenkbar sowie einstellbar, insbesondere fokussierbar, und von außerhalb des Gewächshauses steuerbar ist, wobei auch bei wechselnden Lichtverhältnissen eine Übertragung nach außen sichergestellt ist und sowohl die Verfahrenspflanze(n) als auch die Kontrollpflanze(n) vollständig erfaßt werden kann (können). Im Gewächshaus (3) sind im dargestellten Ausführungsbeispiel zwei Fernsehkameras (22,23) eingebaut, mit welchen Bilder aus diesem Glashaus (3) nach außen übertragen werden können. Damit kann die Bevölkerung, ohne selbst das Gewächshaus (3) in Augenschein nehmen zu müssen, jederzeit über den Zustand der Pflanzen im Gewächshaus (3) informiert werden. Jede Fernsehkamera (22,23) ist auf einem Schlitten (28) angeordnet, der auf einer Schiene (24), die sich in Längsrichtung des Glashauses (3) erstreckt, verfahren werden kann. Die Steuerung des Schlittens und der Kamera kann dabei von außerhalb des Gewächshauses erfolgen. Mindestens eine Fernsehkamera (22,23) ist um eine Achse (21) auf dem ihr zugeordneten Schlitten (28) schwenkbar, räumlich beweg- und einstellbar. Die Schienen (24), welche den Fernsehkameras (22,23) als Führung dienen, sind über eine Aufhängung (25) an der Dachkonstruktion des Gewächshauses (3) abgestützt. Die Kameras selbst sind im Mittelgang des Gewächshauses über Kopfhöhe angeordnet, so daß sie etwaige Besucher des Gewächshauses nicht behindern. Durch Anordnung von Kameras wie vorstehend beschrieben wird nicht nur eine innerbetriebliche Monitorüberwachung ermöglicht, sondern auch eine Übertragungsmoglichkeit an eine öffentliche oder private Fernsehsendeanstalt über eine werksinterne Kontrolleitstelle der betreibenden Gesellschaft geschaffen. Die durch die Erfindung geschaffene Kontroll- und Überwachungsmöglichkeit, einerseits zum positiven Beweis der hohen angewandten Sicherheitstechnik von kerntechnischen Anlagen, jedoch auch andererseits für den eventuellen Austritt radioaktiver Substanzen in Räumen von Bauwerken, die radioaktiv strahlendes Material enthalten, wird mit fortschreitender Betriebsdauer immer bedeutsamer. Es kann hiermit der positive Beweis der Sicherheitstechnik während des Betriebes einer kerntechnischen Anlage, von der betreibenden Gesellschaft initiiert, durch das öffentliche Präsentieren gesund gedeihender Pflanzenkulturen einerseits an Ort und Stelle und andererseits via Fernsehen der Bevölkerung ins Haus geliefert werden. Bekanntlich verspröden Werkstoffe, die mit radioaktiver Ladung in Berührung kommen und speichern diese Strahlung, wodurch z.B. Stahlkessel, Leitungen, Behälter u.dgl. mit der Zeit eine höhere Dosis aufnehmen können.

Selbst nach dem Stillegen, insbesondere von Kernkraftwerken, muß noch eine Kontrollmöglichkeit vorhanden sein, obwohl zwar eine weitere Zunahme der Strahlenbelastung des Werkstoffes aufhört, jedoch die Abstrahlung gemäß der Halbwertszeiten weiter fortdauert.

Es kann vorteilhaft sein, wenn erfindungsgemäß im Nebengebäude, vorteilhaft Gewächshaus, insbesondere Glashaus (3), - in nicht dargestellter Weise - eine Schalttafel zur Anzeige der ablaufenden Betriebsfunktionen der Verfahrensmaßnahmen und deren Einrichtungen an einer Wand übersichtlich installiert ist. Es ist erfindungswesentlich, erforderliche Steuer-, Schalt- und Kontrollvorgänge für den Dauerbetrieb weitestgehend zu automatisieren und auf einer Schalttafel im Glashaus anzuzeigen. Damit wird sichergestellt, daß Besuchern des Glashauses und TV-Sehern der bevorzugt automatisierte Steuerungsablauf, sowie die Schaltungen der Einrichtungen und Funktionserfüllung z.B. das Erreichen des Betriebsdruckes in den Rohren (19) und (20), den Prozeßleitungen u.dgl., sowie Kennzeichnungen durch Beschriftungen an der Schalttafel, und weiters insbesondere gemäß den bei üblichen erforderlichen amtlichen, technischen Abnahmen durch die zuständigen Behörden zu attestierenden Zertifikaten über die Verfahrens- und Betriebsfunktionen solcher Hochdruckanlagen, die Anzeigen während des dauernden Tag- und Nachtbetriebs, garantiert werden können.

**Patentansprüche**

1. Verfahren zum Nachweis des Austritts von radioaktiver Strahlung in radioaktiv strahlende Substanzen enthaltenden Bauwerken (1,2) kerntechnischer Anlagen, z.B. Kernkraftwerken, Wiederaufbereitungs- und Versuchsanlagen, Zwischen- und Endlagerstätten über und unter der Erde u.dgl., bei dem aus Bauwerksräumen (6,7) eines Bauwerkes (1,2), welche strahlende Substanzen enthalten, ein Medium, insbesondere Luft, abgeleitet, insbesondere abgesaugt, hernach konzentriert, insbesondere verdichtet, und einem Strahlungsdetektor zugeführt wird, wobei das konzentrierte, insbesondere verdichtete Medium einer als Strahlungsdetektor unter dem Einfluß radioaktiver Strahlung Veränderungen der Erscheinungsform zeigenden, außerhalb des Bauwerkes (1,2) od.dgl. angeordneten Pflanze(n) (17,18) in der Öffentlichkeit zugänglicher, einsehbarer Weise, insbesondere in einem nahe dem Bauwerk (1,2) gelegenen Nebengebäude (3), vorteilhaft in einem Gewächshaus, insbesondere Glashaus, in einer der Umwelt und der(n) Pflanze(n) gegenüber abgeschlossenen Form zugeführt und nach Passieren der Pflanze(n) in das Kraftwerk od.dgl. zurückgeleitet wird.

2. Verfahren nach Anspruch 1, dadurch gekennzeichnet, daß gasförmiges Medium, insbesondere Luft, auf mindestens $5.10^6$ Pascal (50 bar), vorzugsweise etwa $1.10^7$ Pascal (100 bar), verdichtet wird.

3. Verfahren nach Anspruch 1 oder 2, dadurch gekennzeichnet, daß von der bzw. den dem Einfluß der radioaktiven Strahlung ausgesetzten Pflanze(n) (17,18), zumindest weitestgehend, strahlensicher getrennt, insbesondere im außerhalb des Kernkraftwerkes od.dgl. angeordneten Nebengebäude (3), vorteilhaft Gewächshaus, insbesondere Glashaus, (eine) Kontrollpflanze(n) gleicher Art bzw. Familie und gegebenenfalls gleicher Wachstumsphase in ebenfalls für die Öffentlichkeit zugänglicher und einsehbarer Weise zu Vergleichszwecken eingesetzt wird (werden).

4. Verfahren nach einem der Ansprüche 1, 2 oder 3, dadurch gekennzeichnet, daß als strahlungsdetektor(en) (eine) Pflanze(n) der Art bzw. Familie Nordamerikanischer Coniferen, vorteilhaft der Gattung Pinus strobus (Wheymouthskiefer) sowie zusätzlich Pinus monophylla verwendet wird bzw. werden.

5. Verfahren nach einem der Ansprüche 1 bis 4, dadurch gekennzeichnet, daß die Absaugung der Luft bei Kernkraftwerken od.dgl. aus einem oberhalb des Reaktors gelegenen Bereich und bzw. oder entlang von radioaktives Medium führenden Druckleitungen und bzw. oder nahe der Decke des Bauwerkes od.dgl., insbesondere von Arbeits- und Lagerräumen kerntechnischer Wiederaufbereitungs- und Versuchsanlagen, Zwischen- und Endlagerstätten vorgenommen wird.

6. Verfahren nach einem der Ansprüche 1 bis 5, dadurch gekennzeichnet, daß die Mediumableitung, insbesondere Luftabsaugung, intermittierend erfolgt, wobei in den Förderpausen der Druck im wesentlichen auf dem vor der Förderpause erreichten Niveau mittels eines Druckregelventils mit Druckanzeigegerät und mittels zweier etwa parallelwirkender Schaltventile, von denen je eines vor dem Verteilerblock am Eingang und nach dem Sammlerblock am Ausgang des Nebengebäudes (3), vorteilhaft Gewächshaus, insbesondere Glashaus angeordnet ist, gehalten wird.

**7.** Verfahren nach einem der Ansprüche 1 bis 6, dadurch gekennzeichnet, daß für die Erstausrüstung mit der(n) Pflanze(n) (17,18) im Nebengebäude (3), vorteilhaft Gewächshaus, insbesondere Glashaus, gemeinsam mit den Rohren, bevorzugt mit dem kombinierten Rohrsystem,

Tests durchgeführt werden, wobei gemessene bzw. geprüfte radioaktive Strahlung der Radionuklide, z.B. kontaminiertes Argon, Krypton oder Xenon, die sich bei mehrmals jährlich ereignenden Reaktorschnellabschaltungen in Kernkraftwerken bilden, den Rohren (19,20) unter Druck bis zu $1.10^7$ Pascal (100 bar) zugeführt werden, um eine Äquivalentdosisleistung von 5 rem/h oder höher an die Testgewächse (17,18) zur Voruntersuchung zu liefern.

**8.** Anlage zur Durchführung des Verfahrens nach einem der Ansprüche 1 bis 7, dadurch gekennzeichnet, daß nahe dem radioaktiv strahlende Substanzen enthaltenden Bauwerk (1,2) od.dgl., ein Nebengebäude (3), vorteilhaft Gewächshaus , insbesondere Glashaus , angeordnet ist, welches (eine) unter dem Einfluß radioaktiver Strahlung Veränderungen der Erscheinungsform zeigende Pflanze(n) (17,18) aufnimmt und daß der(n) Pflanze(n), insbesondere jeder Pflanze (17,18), ein Rohrsystem, zweckmäßig ein schraubenlinienförmig gewundenes Rohr (20) und bzw. oder ein mäanderartig gewundenes Rohr (19) zugeordnet ist, wobei die Pflanze(n) (17,18) in dem vom Rohrsystem bzw. Rohr (19,20) umschlossenen Raum angeordnet ist (sind) und vorteilhaft Teile bzw. Äste des Rohrsystems bzw. schraubenlinienförmig bzw. mäanderartig gewundenen Rohres (19) Erzeugende eines (fiktiven) Zylinders oder Kegelstumpfes sind, und daß das Rohrsystem bzw. die Rohre (19,20) mit der Druckseite mindestens eines Kompressors (4), bevorzugt über einen angeschlossenen Verteilerblock (5), mit Zulaufleitungen zu den Rohren (19,20) in Verbindung stehen, und daß der Kompressor (4) mit Medium, insbesondere Luft, aus Räumen (6,7) des die radioaktiv strahlenden Substanzen enthaltenden Bauwerkes (1,2) od.dgl. versorgt wird.

**9.** Anlage nach Anspruch 8, dadurch gekennzeichnet, daß die Rohre, das schraubenlinienförmig gewundene Rohr bzw. das mäanderartig gewundene Rohr, insbesondere das kombinierte Rohrsystem, in einer Ebene endet, die mit der Horizontalebene einen Winkel von mindestens 30° einschließt und in die Zu- und Ablaufleitungen (30,31) zu den Rohren (19,20) bzw. Rohrsystem je ein Absperrventil eingebaut ist.

**10.** Anlage nach Anspruch 8 oder 9, dadurch gekennzeichnet, daß zwischen einander benachbarten Windungen der Rohre (19,20) ein Abstand vorhanden ist, der ein Mehrfaches des Rohraußendurchmessers betragen kann, und daß das Rohrsystem, insbesondere die schraubenlinienförmig und bzw. oder mäanderartig gewundenen Rohre (19,20) mit seinem bzw. ihrem Rücklauf bevorzugt über einen Sammlerblock (15) mit einem Druckanzeigegerät, Druckregelventil und Schaltventil zum Halten des Druckes in den Förderpausen und nachfolgendem Öffnen mit in die Räume des Reaktor- oder Wiederaufbereitungsbauwerkes u.dgl. (1,2) führenden Leitungen (12) verbunden sind, die in den Räumen (6,7) des die radioaktiv strahlenden Substanzen enthaltenden Bauwerkes od.dgl. enden und aus welchem das Medium, insbesondere die Luft, bevorzugt über eine am Rohrende befestigte Austrittsöffnung (14), in die Räume des Bauwerkes zurückgeführt wird.

**11.** Anlage nach einem der Ansprüche 8 bis 10, dadurch gekennzeichnet, daß in das Nebengebäude (3), vorteilhaft Gewächshaus, insbesondere Glashaus, mindestens eine Fernsehkamera (22,23) zur Bildübertragung nach außen eingebaut ist, die auf einem Schlitten (28) angeordnet und auf einer Schiene (24) verfahrbar gelagert ist, wobei die Schiene (24) sich vorzugsweise in Längsrichtung des Glashauses (3) erstreckt, und daß die Fernsehkamera (22,23) auf dem Schlitten (28) räumlich schwenkbar sowie einstellbar, insbesondere fokussierbar und von außerhalb des Gewächshauses steuerbar ist, wobei auch bei wechselnden Lichtverhältnissen eine Übertragung nach außen sichergestellt ist und sowohl die Verfahrenspflanzen als auch die Kontrollpflanzen vollständig erfaßt werden können.

**12.** Anlage nach einem der Ansprüche 8 bis 11, dadurch gekennzeichnet, daß im Nebengebäude(3), vorteilhaft Gewächshaus, insbesondere Glashaus, eine Schalttafel zur Anzeige der ablaufenden Betriebsfunktionen der Verfahrensmaßnahmen und deren Einrichtungen an einer Wand installiert ist.

**Claims**

**1.** A process for detecting the escape of radioactive radiation in buildings (1,2) containing radioactively radiating substances of nuclear facilities, for instance nuclear power plants, reprocessing and experimental plants, interim and final storage sites above and below ground and the like, wherein a medium, in particular air, is let off, in particular sucked off rooms (6,7) of a building (1,2) which contain radiating substances, then concentrated, in particular compressed, and supplied to a radiation detector, the concentrated, in particular compressed medium being fed to (a) plant(s) (17,18) in a way shut-off with respect to the environment and the plant(s), which plant as a radiation detector changes its appearance under the influence of radioactive radiation and is positioned outside the building (1,2) or the like, so as to be accessible to and visible for the public, in particular in an adjoining building (3), advantageously in a greenhouse, in particular glasshouse situated near the building (1,2), and being recycled into the nuclear power plant or the like after passing the plant(s).

2. The process according to claim 1, characterised in that gaseous medium, in particular air, is compressed to at least $5.10^6$ pascal (50 bar), preferably about $1.10^7$ pascal (100 bar).

3. The process according to claim 1 or claim 2, characterised in that, at least to a far extent separated in a radiation-proof way from the plant(s) (17,18) subjected to the influence of radioactive radiation, in particular in the adjoining building (3), advantageously greenhouse, in particular glasshouse, arranged outside the nuclear power plant or the like, (a) control plant(s) of the same species and family, respectively, and optionally of the same phase of growth is/are also employed for comparison purposes in a way accessible to and visible for the public as well.

4. The process according to any of claims 1, 2, or 3, characterised in that (a) plant(s) of the species or family of North American conifers, advantageously of the genus of Pinus strobus (Wheymouths pine) as well as additionally Pinus monophylla may be used as radiation detector(s).

5. The process according to any of claims 1 to 4, characterised in that in nuclear power plants or the like air is sucked off from an area above the reactor and/or along pressure pipes containing radioactive medium and/or near the ceiling of the building or the like, in particular of working and storage rooms of nuclear reprocessing and experimental plants, interim and final storage sites.

6. The process according to any of claims 1 to 5, characterised in that the medium is let off, in particular the air is sucked off, intermittently, the pressure being substantially maintained, during the drawing stops, at the level reached before the drawing stop by means of a pressure control valve with a pressure indicating device and by means of two on-off valves of parallel effect, one of them each being arranged in front of the distributing block at the entrance and behind the collector block at the exit of the adjoining building (3), preferably greenhouse, in particular glasshouse.

7. The process according to any of claims 1 to 6, characterised in that tests are carried out for the initially providing the plant(s) (17,18) in the adjoining building (3), advantageously greenhouse, in particular glasshouse, together with the pipes, preferably with the combined pipe system, measured and checked radioactive radiation of the radionuclides, respectively, for instance contaminated argon, krypton or xenon, forming in nuclear power plants during rapid reactor switch-offs taking place several times a year, being fed to the pipes (19,20) under a pressure of up to $1.10^7$ pascal (100 bar) in order to supply the test plants (17,18) for pretesting with an equivalent dose rate of 5 rem/h or more.

8. An installation for carrying out the process according to any of claims 1 to 7, characterised in that an adjoining building (3), advantageously greenhouse, in particular glasshouse, is arranged near the building (1,2) or the like containing radioactively radiating substances, which adjoining building houses (a) plant(s) showing changes in its/their appearance under the influence of radioactive radiation, and in that the plant(s), in particular each plant (17,18), is associated with a pipe system, conveniently a helically wound pipe (20) and/or a meander-like wound pipe (19), the plant(s) (17,18) being arranged in the space surrounded by the pipe system and pipe (19,20), respectively, and advantageously parts and branches, respectively, of the pipe system or helically wound or meander-like wound pipe (19) being generators of a (fictitious) cylinder or truncated cone, and in that the pipe system and pipes (19,20), respectively, communicate(s) with the pressure side of at least one compressor (4), preferably via a distributor block (5) connected thereto having feeding conduits to the pipes (19,20), and in that the compressor (4) is supplied with medium, in particular air, from rooms (6,7) of the building (1,2) or the like containing the radioactively radiating substances.

9. The installation according to claim 8, characterised in that the pipes, the helically wound pipe and the meander-like wound pipe, respectively, in particular the combined pipe system, ends in a plane forming an angle of at least 30° with the horizontal plane and in that one stop valve each is incorporated in the feeding and discharge conduits (30,31) to the pipes (19,20) and pipe system, respectively.

10. The installation according to claim 8 or claim 9, characterised in that there is a distance between neighbouring windings of the pipes (19,20) which may be several times as large as the outside diameter of the pipe, and in that the pipe system, in particular the helically and/or meander-like wound pipes (19,20) with their barrel recoil communicate preferably via a collector block (15) having a pressure indicating device, pressure control valve and on-off valve for maintaining the pressure during the drawing stops and consecutive opening with conduits (12) leading into the rooms of the reactor or reprocessing building or the like (1,2), which conduits end in the rooms (6,7) of the building or the like containing the radioactively radiating substances and from which the medium, in particular the air, is recycled into the rooms of the building preferably via an exit opening (14) secured to the end of the pipe.

11. The installation according to any of claims 8 to 10, characterised in that at least one telecamera (22,23) for transmitting pictures to the outside is incorporated in the adjoining building (3), advantageously greenhouse, in particular glasshouse, which telecamera is arranged on a sled (28) and moveably supported on a rail (24), the rail (24) preferably extending in the longitudinal direction of the glasshouse (3), and in that the telecamera (22,23) is slewable in space on the sled (28) as well as adjustable, in particular focussable and controllable from outside the greenhouse, transmission to the outside also being ensured in case of changing lighting conditions and it being possible to completely cover the process plants as well as the control plants.

12. The installation according to any of claims 8 to 11, characterised in that a switchboard for displaying the current operative functions of the process measures and their means is installed in one wall of the adjoining building (3), advantageously greenhouse, in particular glasshouse.

## Revendications

1. Procédé pour détecter l'échappement de rayonnement radioactif dans des bâtiments (1,2) contenant des matières avec rayonnement radioactif des installations nucléaires, par exemple centrales nucléaires, installations de retraitement et d'essai, lieux d'entreposage et d'évacuation des déchets radioactifs au-dessus et au-dessous du sol etc., dans lequel un milieu, en particulier de l 'air, est détourné, en particulier aspiré des locaux (6,7) d'un bâtiment (1,2) qui contiennent des matières rayonnantes, ensuite concentré, en particulier comprimé et amené à un détecteur de rayonnement, le milieu concentré, en particulier comprimé, étant amené à une/des plante(s) (17,18) utilisée(s) comme détecteur de rayonnement montrant des changements d' apparance sous l'influence de rayonnement radioactif, arrangées au dehors du bâtiment (1,2) etc. d'une façon accessible au et visible pour le public, en particulier dans un bâtiment attenant (3), préférablement une serre, en particulier en verre, situé près du bâtiment (1,2), d'une façon isolée par rapport à l'environnement et à la/aux plante(s), et recyclé dans la centrale nucléaire etc., après avoir passé la/les plante(s).

2. Procédé selon la revendication 1, caractérisé en ce que du milieu gazeux, en particulier de l'air, est comprimé à au moins $5.10^6$ pascal (50 bar), préférablement environ $1.10^7$ pascal (100 bar).

3. Procédé selon la revendication 1 ou 2, caractérisé en ce qu'une/des plante(s) de contrôle de la même espèce ou bien famille et, le cas échéant, dans la même phase de croissance, est/sont employée(s) à des fins de comparaison aussi d'une façon accessible au et visible pour le public, au moins largement séparée( s), de façon à être résistant au rayonnement, de la/les plante(s) (17,18) soumise(s) à l'influence du rayonnement radioactif, en particulier dans le bâtiment attenant (3), préférablement une serre, en particulier en verre, situé au dehors de la centrale nucléaire etc.

4. Procédé selon l'une des revendications 1, 2 ou 3, caractérisé en ce qu'une/des plante(s) de l'espèce ou bien de la famille de conifères nord-américains, avantageusement du genre Pinus strobus (pin Wheymouths) et de plus Pinus monophylla est/sont employée(s) comme détecteur(s) de rayonnement.

EP 0 378 988 B1

5. Procédé selon l'une des revendications 1 à 4, caractérisé en ce que, dans des centrales nucléaires etc., l'aspiration de l'air est effectuée d'une zone située au-dessus du réacteur et/ou le long de conduites de pression contenant du milieu radioactif et/ou près du plafond du bâtiment etc., en particulier des locaux de travail et de dépôt d'installations nucléaires de retraitement et d'essai, des lieux d'entreposage et d'évacuation des déchets radioactifs.

6. Procédé selon l'une des revendications 1 à 5, caractérisé en ce que le milieu est détourné, en particulier l'air est aspiré, d'une façon intermittente, la pression pendant les arrêts de refoulement étant maintenue essentiellement au niveau atteint avant l'arrêt de refoulement à l'aide d'un règulateur de pression avec indicateur de pression et à l'aide de deux soupapes de commande opérant en parallèle, dont l'une est disposée devant le bloc de distribution à l'entrée et l'autre derrière le bloc collecteur à la sortie du bâtiment attenant (3), avantageusement serre, en particulier en verre.

7. Procédé selon l'une des revendications 1 à 6, caractérisé en ce que, pour l 'équipement initial de/d'une plante(s) (17,18), des essais sont effectués dans le bâtiment attenant (3), avantageusement serre, en particulier en verre, en commun avec les tuyaux, préférablement avec le système de tuyaux combiné, le rayonnement radioactif, mesuré ou bien examiné, des radionuclides, par exemple argon, krypton ou xénon contaminé, qui se forment dans des centrales nucléaires pendant les mises hors de service rapides du réacteur ayant lieu plusieurs fois par an, étant alimenté aux tuyaux (19,20) sous une pression jusqu'à $1.10^7$ pascal (100 bar) pour fournir les plantes d'essai (17,18) d'un débit équivalent de dose de 5 rem/h ou plus pour la recherche préalable.

8. Installation pour la réalisation du procédé selon l'une des revendications 1 à 7, caractérisée en ce qu'un bâtiment attenant (3), avantageusement une serre, en particulier en verre, est situé près du bâtiment (1,2) etc. contenant des matières avec rayonnement radioactif, dans quel bâtiment attenant se trouve(nt) une/des plante(s) (17,18) montrant des changements d'apparance sous l'influence du rayonnement radioactif, et en ce qu'un système de tuyaux, convenablement un tuyau (20) tortueux en forme d'hélice et/ou un tuyau (19) tortueux en forme de méandres est associé à la/aux plante(s), en particulier à chaque plante (17,18), la/les plante(s) étant arrangé dans l'espace enfermée par le système de tuyaux ou bien tuyau (19,20) et préférablement des parties ou bien des branches du système de tuyaux ou bien du tuyau (19) tortueux en forme d'hélice ou bien en forme de méandres sont génératrices d'un cylindre ou cone tronqué (fictif), et en ce que le système de tuyaux ou bien les tuyaux (19,20) sont en communication avec le coté refoulement d'au moins un compresseur (4), préférablement par l'intermédiaire d'un bloc de distribution (5) relié, ayant des conduites d'arrivée aux tuyaux (19,20), et en ce que le compresseur (4) est fourni de milieu, en particulier d'air, venant de locaux (6,7) du bâtiment (1,2) etc. contenant des matières de rayonnement radioactif.

9. Installation selon la revendication 8, caractérisée en ce que les tuyaux, le tuyau tortueux en forme d'hélice ou bien le tuyau tortueux en forme de méandres, en particulier le système de tuyaux combiné, termine(nt) dans un plan incluant un angle d'au moins 30° avec le plan horizontal, et en ce qu'une soupape d'arret est installée dans chaqu'une des conduites d'alimentation et de décharge (30,31) vers les tuyaux (19,20) ou bien le système de tuyaux.

10. Installation selon l'une des revendications 8 ou 9, caractérisée en ce qu'il y a un espacement entre des tours voisins des tuyaux (19,20) qui peut être un multiple du diamètre extérieur des tuyaux, et en ce que le système de tuyaux, en particulier les tuyaux tortueux en forme d'hélice ou bien en forme de méandres (19,20) sont reliés à des conduites (12) menant dans les locaux du bâtiment de réacteur ou de retraitement etc. (1,2) avec leur conduit à retour, préférablement par l'intermédiaire d'un bloc collecteur (15) ayant un indicateur de pression, un régulateur de pression et une soupape de commande pour le maintien de la pression pendant les arrêts de refoulement et l'ouverture subséquent, conduites terminant dans les locaux (6,7) du bâtiment etc. contenant les matières de rayonnement radioactif et desquels le milieu, en particulier l'air, est recyclé dans les locaux du bâtiment, préférablement par l'intermédiaire d'un orifice de sortie (14) attaché à l'issue du tuyeau.

11. Installation selon l'une des revendications 8 à 10, caractérisée en ce qu'au moins une caméra de télévision (22,23) pour la transmission d'images vers l'extérieur est installée dans le bâtiment attenant (3), avantageusement une serre, particulièrement en verre, caméra qui est disposée sur un chariot (28) et logée de façon mobile sur un rail (24), le rail (24) s'étendant préférablement le long de la serre (3),

14

et en ce que la caméra de télévision (22,23) est pivotante dans l'espace sur le chariot (28) aussi bien qu'adjustable, en particulier focalisable et gouvernable de l'extérieur de la serre, une transmission à l'extérieur étant garantie même en cas des conditions de lumière variables et les plantes d'essai aussi bien que les plantes de contrôle pouvant être complètement détectées.

12. Installation selon l'une des revendications 8 à 11, caractérisée en ce qu'un tableau de bord pour indiquer les fonctions de service actuelles des mésures d'opération et leurs dispositifs est installé sur un mur du bâtiment attenant (3), avantageusement une serre, particulièrement en verre.

FIG. 1

FIG. 2

FIG. 3

FIG.5

FIG.4

FIG. 6

FIG. 7

EP 0 378 988 B1